# EUROPÄISCHE PATENTSCHRIFT

(11) **EP 2 952 127 B1**
(45) Veröffentlichungstag und Bekanntmachung des Hinweises auf die Patenterteilung: **21.02.2018**
(21) Anmeldenummer: 15168664.9
(22) Anmeldetag: 21.05.2015
(51) Int. Cl.: A47J 31/40, A47J 31/44

(54) **DICHTUNGSLOSER MISCHER UND GETRÄNKEAUTOMAT**
SEALLESS MIXER AND BEVERAGE MACHINE
MÉLANGEUR SANS JOINT ET AUTOMATE À BOISSONS

(30) Priorität: 04.06.2014 DE 102014210650
(43) Veröffentlichungstag der Anmeldung: 09.12.2015
(73) Patentinhaber: SIELAFF GMBH & CO. KG AUTOMATENBAU, 91567 Herrieden (DE)
(72) Erfinder: Utschig, Jürgen, 91522 Ansbach (DE); Schindler, Bernhard, 91572 Bechhofen (DE); Bayer, Josef, 91567 Herrieden (DE)
(74) Vertreter: Isarpatent

(56) Entgegenhaltungen:
- WO-A1-03/041546
- US-A- 5 952 032
- US-A1- 2005 079 265

## Beschreibung

### GEBIET DER ERFINDUNG

Die vorliegende Erfindung betrifft einen dichtungslosen Mischer zur Zubereitung von Instantprodukten sowie einen Getränkeautomaten mit einem solchen Mischer.

### TECHNISCHER HINTERGRUND

Die vorliegende Erfindung befindet sich auf dem Gebiet der Getränkeautomaten, die zur Zubereitung von Getränken ausgebildet sind. Solche Getränkeautomaten weisen für die Zubereitung der Getränke häufig ein Mischersystem auf, über welches eine Vermischung von Instantprodukten mit einer Flüssigkeit, wie etwa Wasser, vorgenommen wird. Unter Instantprodukten sind hier solche Lebensmittel zu verstehen, die aus Pulver, Granulat, getrockneten Zutaten und dergleichen bestehen und die mit einer kalten oder warmen Flüssigkeit zu einem Endprodukt angerührt werden. Die so zubereiteten Endprodukte werden meist in offener Form in einem Becher, Tasse, Glas oder dergleichen ausgegeben.

Die in allgemein bekannten Getränkeautomaten enthaltenen Mischersysteme für Instantprodukte umfassen neben einer Mischerkammer, welche über einen Einlass mit den Instantprodukten und der Flüssigkeit befüllt wird, typischerweise einen Elektroantrieb, welcher über eine Antriebswelle eines oder mehrere an die Antriebswelle gekoppelte und sich in der Mischerkammer befindende Mischerräder antreibt. Hierzu wird die Antriebswelle beispielsweise durch ein Lagerschild in die Mischerkammer hineinragend angeordnet. Die Mischerräder wiederum vermischen die zu vermischenden Instantprodukte und Flüssigkeiten durch Rotation zu dem Endprodukt. Beispielsweise beschreibt die Druckschrift WO 2003/041546 A1 ein solches Mischersystem.
Solche bekannten Mischersysteme sind auf eine möglichst effektive Abdichtung der Antriebswelle bzw. des Lagerschilds angewiesen, damit die verwendeten Flüssigkeiten nicht mit dem Antrieb oder einem anderen empfindlichen Bauteil in Kontakt gelangen. Beispielsweise kommen hierfür Silikondichtungen zum Einsatz, welche unter anderem zwischen Antriebswelle und Lagerschild angebracht werden. Da sich an solchen Abdichtungen Zuckerkristalle oder anderes Granulat ablagern kann, tendieren diese dazu, mehr oder weniger schnell zu verschleißen. Um die ständige Funktionsbereitschaft solcher Getränkeautomaten abzusichern, werden daher meist relativ kurze Serviceintervalle vorgesehen, was wiederum hohe Service- und Wartungskosten nach sich ziehen. Gleichzeitig steigt die Ausfallwahrscheinlichkeit bei unregelmäßiger oder vernachlässigter Wartung an, was es aber zu vermeiden gilt. Häufige Ausfälle eines vielfrequentierten Getränkeautomaten führen wiederum zur Unzufriedenheit des Betreibers des Getränkeautomaten und der Kunden.

### ZUSAMMENFASSUNG DER ERFINDUNG

Vor diesem Hintergrund liegt der vorliegenden Erfindung die Aufgabe zugrunde, einen Mischer für Instantprodukte zu schaffen, welcher weniger ausfallgefährdet ist. Erfindungsgemäß wird diese Aufgabe gelöst durch einen Mischer mit den Merkmalen des Hauptanspruchs 1 und/oder durch einen Getränkeautomaten mit den Merkmalen des Patentanspruchs 18.

Die erfindungsgemäße Lösung sieht einen dichtungslosen Mischer zur Zubereitung von Instantprodukten mit einer Mischerkammer zur Vermischung eines in die Mischerkammer eingelassenen Instantproduktes mit einer in die Mischerkammer eingelassenen Flüssigkeit vor. Der Mischer weist eine von einem Antrieb antreibbare Antriebswelle auf, welche antriebsseitig durch ein Lagerschild hindurch in die Mischerkammer hineinführend angeordnet ist. Ferner weist der Mischer ein Mischerrad auf, welches innerhalb der Mischerkammer im Bereich eines Einlasses an der Antriebswelle angebracht ist und welches dazu ausgebildet ist, das eingelassene Instantprodukt mit der eingelassenen Flüssigkeit durch Rotation zu einem Endprodukt zu vermischen. Weiterhin weist der Mischer eine Schleuderscheibe auf, welche innerhalb der Mischerkammer an der Antriebswelle zwischen dem Mischerrad und dem Lagerschild angebracht ist und welche dazu ausgebildet ist, das vom Mischerrad erzeugte Endprodukt vom Lagerschild fernzuhalten.

Die der vorliegenden Erfindung zugrunde liegende Idee besteht darin, eine Dichtung zwischen Antrieb und Mischerkammer zu vermeiden, indem die Abdichtfunktion von einer innerhalb der Mischerkammer rotierenden Schleuderscheibe übernommen wird. In die Mischerkammer eingelassenes Instantprodukt wird durch die Rotation des Mischerrads mit ebenfalls eingelassener Flüssigkeit vermischt. Gleichzeitig wird das hierdurch entstehende Endprodukt durch das Mischerrad weiter geleitet. Die Schleuderscheibe ist so zwischen Mischerrad und Lagerschild angeordnet, dass eventuell bis zum Schleuderrad gelangendes Endprodukt bzw. Flüssigkeit durch die Schleuderscheibe abgefangen wird und durch die Rotation nach Außen weggeschleudert wird. Somit gelangt erfindungsgemäß kaum Flüssigkeit oder Endprodukt zum Lagerschild des Antriebs.

Der besondere Vorteil der erfindungsgemäßen Lösung besteht darin, dass keine gesonderte Dichtung des Lagerschilds notwendig ist. Durch den Entfall der Dichtung ergibt sich eine deutlich geringere Ausfallwahrscheinlichkeit und der Mischer muss seltener gewartet werden.

Vorteilhafte Ausgestaltungen und Weiterbildungen ergeben sich aus den weiteren Unteransprüchen sowie aus der Beschreibung unter Bezugnahme auf die Figuren.

Gemäß einer bevorzugten Weiterbildung ist die Antriebswelle vom Lagerschild ausgehend schräg nach unten ausgerichtet. Durch eine Schrägstellung der Antriebswelle wird erreicht, dass die eventuell an der Schleuderscheibe vorbei zum Lagerschild gelangende Menge an Flüssigkeit und Endprodukt minimiert wird. Sollte Flüssigkeit trotz der rotierenden Schleuderscheibe dorthin gelangen, so fließt diese aufgrund der Schrägstellung schwerkraftbedingt sofort wieder zurück nach unten.

Gemäß einer weiteren bevorzugten Weiterbildung ist der Einlass von oben schräg nach unten auf die Antriebswelle ausgerichtet. Vorzugsweise ist der Einlass insbesondere von oben schräg nach unten auf die Antriebswelle in einem rechten Winkel zur Ausrichtung der Antriebswelle ausgerichtet. Instantprodukte oder Flüssigkeiten können so selbstständig, also schwerkraftbedingt allein aufgrund ihres Gewichtes, in die Mischerkammer eintreten. Es werden keine zusätzlichen Hilfsmittel benötigt, um die Befüllung der Mischerkammer zu ermöglichen.

Ferner ist vorzugsweise ein Endproduktauslass an einer unteren Seite der Mischerkammer vorgesehen. In der Mischerkammer erzeugtes Endprodukt kann so einfach vom Mischerrad aus nach unten fallen oder fließen und die Mischerkammer verlassen.

Vorzugsweise ist der Endproduktauslass so angeordnet und ausgebildet, dass das Endprodukt aus dem Endproduktauslass selbstständig allein aufgrund seines Gewichtes aus der Mischerkammer austreten kann. Speziell im Zusammenspiel mit einer schräg gestellten Antriebswelle und einem schräg nach unten ausgerichtetem Einlass kann der Mischer so besonders kostengünstig und ausfallresistent konstruiert werden, da zusätzliche Beförderungsmittel vermieden werden und Roh- und Endprodukte sozusagen von selbst in den Mischer gelangen und aus diesem wieder austreten. Unterstützt wird der Austritt der Roh- und Endprodukte insbesondere auch durch die Rotation des Mischerrads.

Gemäß einer bevorzugten Weiterbildung ist der Einlass oberhalb des Endproduktauslasses angeordnet. Auch diese Weiterbildung hilft dabei, einen Mischer besonders effizient und einfach und somit wenig wartungsanfällig zu konstruieren. Flüssigkeiten und Pulver bewegen sich idealerweise alleine aufgrund ihres Gewichtes durch den Mischer. Komplexe Beförderungsmittel werden vermieden und Verstopfungs- oder Ausfallrisiken werden minimiert.

Ferner sind gemäß einer bevorzugten Weiterbildung lagerschildseitig Rippenstrukturen an der Schleuderscheibe vorgesehen. Die Rippenstrukturen sind vorzugsweise dazu ausgebildet, bei Rotation der Schleuderscheibe einen Überdruck zwischen der Schleuderscheibe und dem Lagerschild gegenüber der restlichen Mischerkammer zu erzeugen. Durch den Überdruck zwischen Schleuderscheibe und Lagerschild wird Flüssigkeit oder Pulver davon abgehalten, in diesen Bereich zu gelangen.

Selbst wenn also, in geringfügigem Maße, Flüssigkeit an der Schleuderscheibe vorbei in diese Bereich gelangen sollte, wird diese Flüssigkeit, bevor sie auf das Lagerschild treffen könnte, durch den dort herrschenden Überdruck sofort wieder zurückgedrängt. Speziell im Zusammenspiel mit einer schräg gestellten Antriebswelle wird hiermit gewissermaßen eine (nahezu) berührungslose Abdichtung des Lagerschilds und des Antriebs realisiert.

Vorzugsweise sind die Rippenstrukturen auf der Schleuderscheibe flügelartig in regelmäßigen Abständen um die Antriebswelle herum angebracht. Flügelartige Rippenstrukturen stellen eine von mehreren konstruktiv vorteilhaften und praktischen Ausgestaltungen der Schleuderscheibenrückseite dar, welche bei Rotation der Schleuderscheibe zu einem Überdruck im Bereich zwischen dieser und dem Lagerschild führt.

Gemäß einer weiteren bevorzugten Weiterbildung sind die Rippenstrukturen senkrecht auf der Schleuderscheibe in Richtung des Lagerschilds angeordnet. Die senkrechte Anordnung der Rippenstrukturen auf der Schleuderscheibe, beispielsweise in flügelartiger regelmäßiger Anordnung, ist eine mögliche robuste und einfach herzustellende Ausgestaltung einer Schleuderscheibe zur Erzeugung eines Überdrucks im Bereich des Lagerschilds. Vorzugsweise ist die Schleuderscheibe einteilig aus Kunststoff in einem Spritzgussverfahren hergestellt. Denkbar wäre aber auch eine mehrstückige Ausgestaltung der Schleuderscheibe.

Gemäß einer bevorzugten Weiterbildung ist das Mischerrad als ein Flügelrad ausgebildet. Die konstruktive Ausgestaltung des Mischerrads als Flügelrad ist eine vorteilhafte und einfache, jedoch nichtdestotrotz effektive Technik, um ein Mischerrad zu schaffen, welches gleichzeitig robust ist und effizient Flüssigkeiten mit Instantprodukten vermischt.

Gemäß einer bevorzugten Weiterbildung ist ein Überlauf zwischen der Schleuderscheibe und dem Lagerschild angeordnet. Dieser Überlauf ermöglicht es, zwischen der Schleuderscheibe und dem Lagerschild vorhandene Flüssigkeit abzuleiten und damit von dem Lager sowie dem Antrieb fernzuhalten. Sollte die Mischerkammer beispielsweise aufgrund einer Fehlfunktion des Mischers mit Flüssigkeit zu verstopfen zu drohen, so kann die Flüssigkeit in dieser bevorzugten Ausgestaltung frühzeitig bereits vorher über den Überlauf abfließen. Generell wird so sämtliche Flüssigkeit abgeführt, die in den Bereich zwischen Schleuderscheibe und Lagerschild gelangt.

Vorzugsweise ist das Lagerschild mit zumindest einem Kragen ausgebildet, der vom Lagerschild ausgehend auf die Schleuderscheibe ausgerichtet ist. Der Kragen ist dazu ausgebildet, zwischen die Schleuderscheibe und den Lagerschild gelangende Flüssigkeit von der Antriebswelle fernzuhalten. Durch den zumindest einen Kragen wird ein verlängerter Spalt zwischen dem Lagerschild und der Schleuderscheibe zur Antriebswelle hin - insbesondere zur Lagerung der Antriebswelle hin - geschaffen, der den Strömungsweg einer Flüssigkeit verlängert, die zwischen die Schleuderscheibe und den Lagerschild gelangt und zur Antriebswelle hinfließt. Durch den verlängerten Strömungsweg entsteht ein größerer Strömungswiderstand, so dass die Flüssigkeit vorteilhafterweise verstärkt von der Antriebswelle ferngehalten wird.

Gemäß einer anderen bevorzugten Weiterbildung ist ferner ein Antrieb zum Antreiben der Antriebswelle vorgesehen. Vorzugsweise ist dieser Antrieb ein Elektromotor. Durch einen solchen elektrischen Antrieb lässt sich der Mischer beispielsweise in einem vollautomatischen Getränkeverkaufsautomaten verwenden.

Gemäß eine weiteren bevorzugten Weiterbildung schließt eine Stirnfläche der Antriebswelle mit einer unteren Gehäusewand der Mischerkammer ab. Die Antriebswelle wird so stabil an beiden Enden am Mischer gelagert und damit gesichert. Speziell eine schräg gestellte Antriebswelle ist so geringeren Belastungen ausgesetzt, da diese nicht ausschließlich von einem einzelnen Lager, wie etwa dem lagerschildseitigen Lager, aufgefangen werden müssen.

Vorzugsweise ist ein Trichter vorgesehen, über welchen die Mischerkammer durch den Einlass mit dem Instantprodukt und/oder der Flüssigkeit befüllbar ist. Ein Trichter ist so ausgestaltet, dass Pulver und Flüssigkeiten alleine aufgrund ihres Gewichtes durch den Einlass in die Mischerkammer gelangen können.

Ferner ist vorzugsweise eine Zuführrutsche vorgesehen, über welche der Trichter mit dem Instantprodukt befüllbar ist. Beispielsweise können über eine solche Zuführrutsche verschiedene Instantprodukte aus verschiedenen Vorratsbehältern automatisch in die Mischerkammer eingelassen werden. Vorzugsweise ist weiterhin ein Flüssigkeitseinlass vorgesehen ist, über welchen die Flüssigkeit in den Trichter einlassbar ist. Durch die Kombination eines Flüssigkeitseinlasses mit einer Zuführrutsche für Instantprodukte lässt sich ein vollautomatischer Verkaufsautomat für Getränke konstruieren, bei welchem verschiedene Instantprodukte mit einer oder mehreren Flüssigkeiten in eine Mischerkammer eingelassen werden und dort im Anschluss zu einem Endprodukt vermischt werden.

Ferner ist vorzugsweise eine Absaugung mit dem Trichter verbunden, die dazu ausgebildet ist, sich im Trichter bildenden Dampf abzusaugen. Die Absaugung verhindert vorteilhafterweise das Verkleben von Flüssigkeit und Instantprodukt im Trichter und im Bereich der Zuführrutsche, indem Dampf abgesaugt wird bevor er zu Zuführrutsche gelangt.

Gemäß einer anderen bevorzugten Weiterbildung ist die Antriebswelle über ein Lager mit dem Antrieb verbunden. Das Lager ist dabei vorzugsweise ein Radiaxlager. Ein so genanntes Radial-Axial-Lager (Radiaxlager) unterbindet Bewegungen der Antriebswelle in beinahe sämtlichen Freiheitsgraden der relativen Bewegung von Welle und Lager. Es wird ausschließlich die Rotation der Antriebswelle um ihre Achse zugelassen. Translatorische Bewegungen der Antriebswelle in radialer oder axialer Richtung werden hingegen unterbunden. Dies ist insbesondere im Falle der Schrägstellung von Vorteil, da es in diesen Fällen zu ungleichmäßigen Belastungen auf die Antriebswelle kommen kann.

Die obigen Ausgestaltungen und Weiterbildungen lassen sich, sofern sinnvoll, beliebig miteinander kombinieren. Weitere mögliche Ausgestaltungen, Weiterbildungen und Implementierungen der Erfindung umfassen auch nicht explizit genannte Kombinationen von zuvor oder im Folgenden bezüglich der Ausführungsbeispiele beschriebenen Merkmale der Erfindung. Insbesondere wird dabei der Fachmann auch Einzelaspekte als Verbesserungen oder Ergänzungen zu der jeweiligen Grundform der vorliegenden Erfindung hinzufügen.

### INHALTSANGABE DER FIGUREN

Die vorliegende Erfindung wird nachfolgend anhand der in den schematischen Figuren angegebenen Ausführungsbeispiele näher erläutert. Es zeigen dabei:
- Fig. 1: eine perspektivische Ansicht eines erfindungsgemäßen Getränkeautomaten von vorne,
- Fig. 2: eine Schnittansicht eines erfindungsgemäßen dichtungslosen Mischers aus dem Getränkeautomaten von Fig. 1,
- Fig. 3: eine perspektivische Ansicht einer Schleuderscheibe aus dem dichtungslosen Mischer von Fig. 2, und
- Fig. 4: eine perspektivische Ansicht einer Überlaufvorrichtung aus dem dichtungslosen Mischer von Fig. 2.

Die beiliegenden Figuren sollen ein weiteres Verständnis der Ausführungsformen der Erfindung vermitteln. Sie veranschaulichen Ausführungsformen und dienen im Zusammenhang mit der Beschreibung der Erklärung von Prinzipien und Konzepten der Erfindung. Andere Ausführungsformen und viele der genannten Vorteile ergeben sich im Hinblick auf die Zeichnungen. Die Elemente der Zeichnungen sind nicht notwendigerweise maßstabsgetreu zueinander gezeigt.

### BESCHREIBUNG VON AUSFÜHRUNGSBEISPIELEN

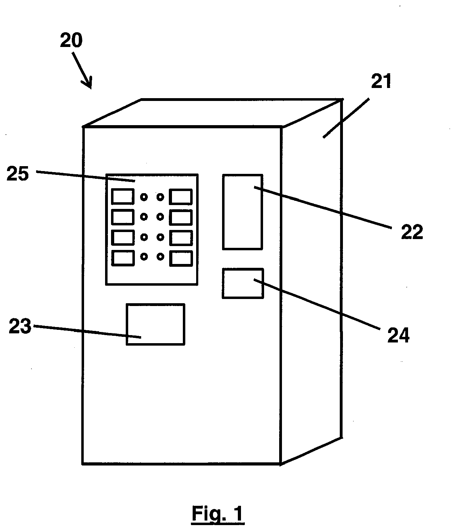

Fig. 1 zeigt eine perspektivische Ansicht eines erfindungsgemäßen Getränkeautomaten von vorne.

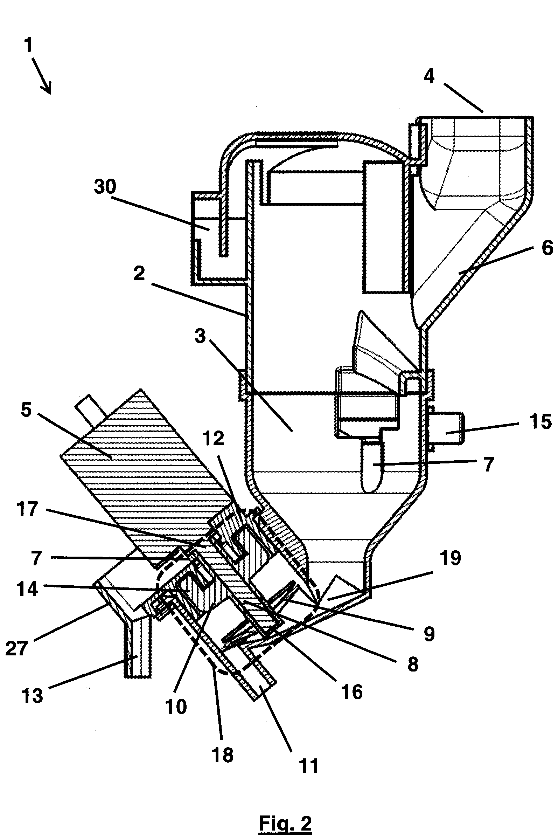

In Fig. 1 bezeichnet das Bezugszeichen 20 einen Getränkeautomaten. Dieser Getränkeautomat 20 ist zur Zubereitung von Kaltgetränken, Warmgetränken und/oder anderen flüssigen Lebensmitteln vorgesehen. An der Frontseite des Gehäuses 21 sind außen ein Auswahlfeld 25 und ein Anzeigefeld 22 sowie ein Ausgabefach 23 und ein Rückgeldfach 24 angebracht. Im Innern des Gehäuses 21 ist ein in Fig. 1 nicht gezeigter Mischer 1 vorgesehen, durch welchen Getränke aus verschiedenen Instantprodukten und Flüssigkeiten zusammengemischt werden. Der genaue Aufbau und die Funktionsweise dieses Mischers 1 wird nachfolgend mit Bezug auf die Fig. 2 näher erläutert.

Instantprodukte sind halbfertige Lebensmittel, die aus Pulver, Granulat oder getrockneten Zutaten bestehen und die mit einer kalten oder warmen bis heißen Flüssigkeit zu einem Endprodukt angerührt werden. Das Endprodukt muss typischerweise bloß erhitzt werden, ohne dass beispielsweise Garen oder ähnliches zur Zubereitung notwendig wären. Typischerweise vermischen solche Getränkeautomaten Instantprodukte, z.B. Instantkaffee oder Instantsuppe, mit einer Flüssigkeit, z.B. Wasser, zu einem Endprodukt, z.B. Kaffee oder Suppe, und geben dieses in offener Form in einem Becher, einer Tasse, einem Glas oder dergleichen aus. Die Instantprodukte, und eventuell auch die Flüssigkeiten, werden hierzu in verschiedenen Vorratsbehältern aufbewahrt. Häufig besitzen solche Automaten einen Wasseranschluss für die Zufuhr von Wasser und Mittel, um dieses zu erhitzen. Ein solcher Getränkeautomat kann beispielsweise als Standautomat für die kommerzielle Nutzung ausgeführt sein oder alternativ auch beispielsweise in einer "Table Top"-Ausführung für die private Nutzung gestaltet sein.

Der in dem Ausführungsbeispiel in Fig. 1 abgebildete Getränkeautomat 20 ist ein Standautomat für die kommerzielle Nutzung. Ein Kunde kann über das Auswahlfeld 25 ein bestimmtes Produkt auswählen. Hierzu können beispielsweise verschiedene Bedientasten im Auswahlfeld 25 angebracht sein, die jeweils einem bestimmtem Produkt zugeordnet sind. Die Produkte können beispielsweise auf Abbildungen im Auswahlfeld 25 neben der entsprechenden Bedientaste dargestellt sein. Das vom Kunden ausgewählte Produkt wird im Anschluss an die Auswahl zusammen mit der zu bezahlenden Geldsumme auf dem Anzeigefeld 22 angezeigt. Sobald der Kunde das Produkt bezahlt hat, wird das Produkt von dem im Innern des Getränkeautomaten 20 befindlichen Mischer 1 zubereitet und vom Getränkeautomaten 20 beispielsweise in einen Becher gefüllt, der dem Ausgabefach 23 entnommen werden kann. Eventuell anfallendes Rückgeld kann der Kunde über das Rückgeldfach 24 empfangen.

Fig. 2 zeigt eine Schnittansicht eines erfindungsgemäßen dichtungslosen Mischers 1 aus dem Getränkeautomaten 20 von Fig. 1.

Der Mischer 1 ist zur Zubereitung von Instantprodukten ausgebildet. Hierzu umfasst der Mischer 1 eine Zuführeinrichtung, eine Mischerkammer 18 und einen Antrieb 5.

Die Auswahl des Endprodukts wird vom Kunden über das Auswahlfeld 25 am Getränkeautomaten 20 aus Fig. 1 getroffen. Der Getränkeautomat 20 wählt daraufhin automatisch die für die Zubereitung notwendigen Instantprodukte und Flüssigkeiten aus. Als nächstes werden das Instantprodukt, beispielweise in Pulver- oder Granulatform, und die Flüssigkeit über die Zuführeinrichtung der Mischerkammer 18 zugeführt. In der Mischerkammer 18 werden daraufhin das Instantprodukt und die Flüssigkeit zu dem vom Kunden ausgewählten Endprodukt vermischt. Der Mischvorgang selber wird hierbei von dem Antrieb 5 angetrieben. Das in der Mischkammer 18 zusammengemischte Endprodukt wird vom Getränkeautomaten 20 im Anschluss in einen Becher gefüllt, der in das Ausgabefach 23 ausgegeben wird.

Die genannte Zuführeinrichtung umfasst unter anderem eine Einführöffnung 4, die in einer Gehäusewand 2 des Mischers 1 angebracht ist. An die Einführöffnung 4 schließt sich eine Zuführrutsche 6 an, welche mit einem Trichter 3 verbunden ist. Weiterhin ist ein Flüssigkeitseinlass 15 vorgesehen, der ebenso mit dem Trichter 3 verbunden ist. Der Trichter 3 führt zu einem Einlass 19 und darüber in die Mischerkammer 18.

Die Instantprodukte werden im Getränkeautomaten 20 in verschiedenen Vorratsbehältern (nicht abgebildet) aufbewahrt. Nach der Auswahl durch den Kunden wird eines oder mehrere dieser Instantprodukte durch die Einführöffnung 4 über die Zuführrutsche 6 in den Trichter 3 geleitet. Ebenso wird entsprechend eine Flüssigkeit durch den Flüssigkeitseinlass 15 in den Trichter 3 gelenkt. Instantprodukte und Flüssigkeiten gelangen so über den Trichter 3 durch den Einlass 19 in die Mischerkammer 18. Innerhalb des Trichters 3 befindet sich ein Überlauf 7 und eine Absaugung 30. Der Überlauf 7 verhindert den Rückstau von Flüssigkeit bzw. Instantprodukt innerhalb des Trichters 3. Die Absaugung 30 dient dazu, im Trichter 3 entstehenden Dampf abzusaugen, so dass dieser beispielsweise nicht zur Zuführrutsche 6 und zur Einführöffnung 4 gelangen kann und es nicht zu einem Verkleben von Flüssigkeit und Instantprodukt kommt.

Außerhalb der Mischerkammer 18 ist ein Elektromotor 5 als Antrieb 5 am Mischer 1 angebracht, von welchem einen Antriebswelle 8 ausgeht, die schräg nach unten durch ein Lagerschild 12 in die Mischerkammer 18 hineinragend angeordnet ist. Die Antriebswelle 8 ist über ein Lager 17 mit dem Elektromotor 5 gekoppelt und liegt zudem an einer Stirnseite 16 an der Gehäusewand 2 des Mischers 1 innerhalb der Mischerkammer 18 an.

Über eine Rotation der Antriebswelle 8 wird die Vermischung der Instantprodukte und Flüssigkeiten innerhalb der Mischerkammer 18 angetrieben. Da die Antriebswelle 8 durch die Schrägstellung potenziell hohen und ungleichmäßigen Belastungen ausgesetzt wird, wurden Vorkehrungen getroffen, um diese abzufangen. Zum einen führt die Befestigung der Antriebswelle 8 an ihren beiden Enden dazu, dass auftretende Kräfte nicht ausschließlich von einem einzelnen Lager, wie etwa dem lagerschildseitigen Lager 17, aufgefangen werden müssen. Zum anderen ist das Lager 17 als Radial-Axial-Lager (Radiaxlager) ausgebildet. Diese unterbindet Bewegungen der Antriebswelle bezüglicher sämtlicher Freiheitsgrade der relativen Bewegung von Welle und Lager bis auf die Rotation der Antriebswelle um ihre Achse.

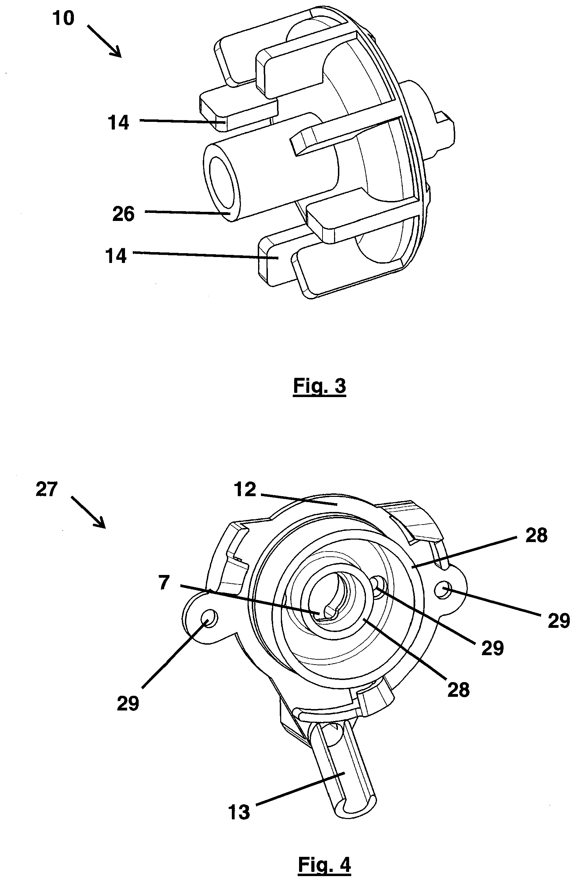

Die Mischerkammer 18 umfasst einen Einlass 19 und einen Endproduktauslauf 11. Innerhalb der Mischerkammer 18 sind an der Antriebswelle 8 ein Mischerrad 9 und eine Schleuderscheibe 10 angebracht. Das Mischerrad 9 ist im Bereich des Einlasses 19 so angeordnet, dass das Instantprodukt und die Flüssigkeit auf das Mischerrad 9 treffen, nachdem sie von dem Trichter 3 in den Einlass 19 geleitet wurden. Die Schleuderscheibe 10 befindet sich zwischen dem Mischerrad 9 und dem Lagerschild 12. Die Schleuderscheibe 10 weist lagerschildseitig Rippenstrukturen 14 auf. Die Schleuderscheibe 10 und die daran angebrachten Rippenstrukturen 14 sind im Detail in Fig. 3 abgebildet. In der Nähe der Rückseite der Schleuderscheibe 10 befindet sich eine Überlaufvorrichtung 27, welche das Lagerschilds 12 bildet und einen Überlauf 7 bereitstellt, der mit einem Überlaufauslass 13 verbunden ist (Ein weiterer Überlauf 7 befindet sich innerhalb des Trichters 3). Diese Überlaufvorrichtung 27 wird als einzelnes Bauteil in Fig. 4 gezeigt.

Die Antriebswelle 8 ist vom Lagerschild 12 ausgehend schräg nach unten in die Mischerkammer 18 hinein ausgerichtet. Auch der Einlass 19 ist von oben schräg nach unten auf die Antriebswelle 8 und das Mischerrad 9 zu ausgerichtet. Insbesondere sind auch die Mischerkammer 18 und der an deren Unterseite vorhandene Endproduktauslass 11 so schräg angeordnet, dass das Endprodukt vom Mischerrad 9 kommend selbstständig allein aufgrund seines Gewichtes aus der Mischerkammer 18 austreten kann. Hierzu ist zudem der Einlass 19 oberhalb des Endproduktauslasses 11 angeordnet.

Instantprodukte und Flüssigkeiten werden in den Trichter 3 geleitet und durch diesen über einen Einlass 19 in die Mischerkammer 18 des Mischer 1 eingeleitet. In der Mischerkammer 18 werden diese vom Mischerrad 9 empfangen und durch Rotation des Mischerrads 9 zu einem Endprodukt vermischt. Das Mischerrad 9 ist hierzu an der Antriebswelle 8 so befestigt, dass es zusammen mit dieser um die Achse der Antriebswelle 8 rotiert. Durch die Rotation wird das Endprodukt nicht nur vermischt, sondern auch automatisch weiter in die Mischerkammer 18 geleitet, welche es durch einen Endproduktauslauf 11 wieder verlässt. Auch die zwischen Mischerrad 9 und Lagerschild 12 an der Antriebswelle 8 angebrachte Schleuderscheibe 10 rotiert mit der Antriebswelle 8 mit. Von dem Mischerrad 9 weitergeleitetes Endprodukt trifft auf die Schleuderscheibe 10. Dort wird es von der Schleuderscheibe 10 aufgrund der durch die Rotation der Schleuderscheibe 10 auftretenden Fliehkräfte nach außen an die Innenwand der Mischerkammer 18 weggeschleudert. Daraufhin fließt das Endprodukt von der Innenwand in den Endproduktauslauf 11 ab und kann im Anschluss von dem Getränkeautomaten 20 in einen Becher in das Ausgabefach 23 ausgegeben werden.

Der besondere Vorteil der erfindungsgemäßen Lösung besteht darin, dass kein spezielle Dichtung zwischen der Antriebswelle 8 und dem Lagerschild 12 bzw. dem Elektromotor 5 vorhanden ist. Solche herkömmlichen Dichtungen, wie z.B. Silikondichtungen, sind typischerweise kritische Bauteile, die häufig zu Ausfällen und einem hohen Wartungsaufwand führen. Durch den Entfall solcher Dichtungen ergibt sich eine deutlich geringere Ausfallwahrscheinlichkeit. Erreicht wird dies dadurch, dass die Schleuderscheibe 10 gewissermaßen die Funktion einer Dichtung übernimmt, indem durch die Rotation Flüssigkeit davon abgehalten wird, in den Bereich des Lagerschilds 12 zu gelangen. Unterstützt wird die abdichtende Funktion der Schleuderscheibe 10 durch die schräge Anordnung der Mischerkomponenten, insbesondere der Mischerkammer 18 und der Antriebswelle 8. Durch die Schleuderscheibe 12 wird zwar ein signifikanter Anteil Flüssigkeit von dem Bereich zwischen Schleuderscheibe 10 und Lagerschild 12 ferngehalten, allerdings gelangt immer ein kleiner Rest der Flüssigkeit in diesen Bereich. Durch die Schrägstellung kann dieser Rest weiter reduziert werden. Darüber hinaus sorgt der Überlauf 7 dafür, dass sämtliche in diesen Bereich gelangende Flüssigkeit abfließen kann, bevor Ablagerungen entstehen können.

Fig. 3 zeigt eine perspektivische Ansicht einer Schleuderscheibe 10 aus dem dichtungslosen Mischer 1 von Fig. 2.

Die lagerschildseitigen Rippenstrukturen 14 an der Schleuderscheibe 10 sind dazu ausgebildet, bei Rotation der Schleuderscheibe 10 einen Überdruck zwischen der Schleuderscheibe 10 und dem Lagerschild 12 gegenüber der restlichen Mischerkammer 18 zu erzeugen. Der Überdruck unterstützt zusätzlich die weiter oben beschriebene abdichtende Funktion der Schleuderscheibe 10 im Zusammenspiel mit der Schrägstellung der Antriebswelle 8. Der Überdruck erschwert es jeglicher Flüssigkeit zusätzlich, an der Schleuderscheibe 10 vorbei in den Bereich zwischen Schleuderscheibe 10 und Lagerschild 12 einzutreten. Verschiedene Ausführungen der Rippenstrukturen 14 sind vorgesehen, um einen Überdruck zu erzeugen. Beispielsweise können die Rippenstrukturen 14 auf der Schleuderscheibe 10 flügelartig in regelmäßigen Abständen um die Antriebswelle 8 herum angeordnet sein. Zusätzlich oder alternativ können die Rippenstrukturen 14 senkrecht auf der Schleuderscheibe 10 in Richtung des Lagerschilds 12 angeordnet sein. Die gewählte Form der Rippenstrukturen 14 folgt aus der Abwägung möglichst günstiger Rotationseigenschaften zur Erzeugung eines Überdrucks mit einer robusten und einfach herstellbaren Bauweise. Beispielsweise kann die Schleuderscheibe 10 zusammen mit den Rippenstrukturen 14 aus einem einzelnen Kunststoffteil hergestellt sein. Dieses kann beispielsweise in einem Spritzgussverfahren produziert worden sein. Die in Fig. 3 gezeigte Schleuderscheibe 10 ist darüber hinaus über einen Aufsteckzylinder 26 auf die Überlaufvorrichtung 27 aufsteckbar. Alternativ können die Schleuderscheibe 10 und die Rippenstrukturen 14 aber auch aus mehreren aneinander befestigten Komponenten bestehen. Hier können auch Ausführungen aus Metall vorgesehen sein.

Fig. 4 zeigt eine perspektivische Ansicht einer Überlaufvorrichtung 27 aus dem dichtungslosen Mischer 1 von Fig. 2. Die in Fig. 4 gezeigte Überlaufvorrichtung 27 bildet das Lagerschild 12 und stellt einen Überlauf 7 bereit, der mit einem Überlaufauslass 13 verbunden ist. Die Überlaufvorrichtung 27 kann beispielsweise einteilig aus Kunststoff ausgebildet sein. In Fig. 4 sind mehrere Bohrungen 29 zu sehen, über welche die Überlaufvorrichtung 27 im Mischer 1 befestigt werden kann. Die Überlaufvorrichtung 27 ist mit zwei Kragen 28 ausgebildet, welche beide vom Lagerschild 12 ausgehen, so dass sie im montierten zustand auf die Schleuderscheibe 10 ausgerichtet sind. Im montierten Zustand ragen die Rippenstrukturen 14 der Schleuderscheibe 10 drehbar in den Bereich zwischen den beiden Kragen 28 hinein (vgl. Fig. 2). Die Kragen 28 sind so angeordnet und ausgebildet, dass zwischen die Schleuderscheibe 10 und den Lagerschild 12 gelangende Flüssigkeit von der Antriebswelle 8 ferngehalten wird. Durch die beiden Kragen 28 wird ein verlängerter Spalt zwischen dem Lagerschild 12 und der Schleuderscheibe 10 zur Antriebswelle 8 und deren Lager 17 hin geschaffen. Dieser Spalt verlängert den Strömungsweg einer Flüssigkeit, die zwischen die Schleuderscheibe 10 und den Lagerschild 12 gelangt und zur Antriebswelle 8 hinfließt. Durch den verlängerten Strömungsweg entsteht ein größerer Strömungswiderstand, so dass die Flüssigkeit vorteilhafterweise verstärkt von der Antriebswelle 8 ferngehalten wird. Allerdings kann Flüssigkeit nicht vollständig von der Antriebswelle 8 ferngehalten werden. Der restliche Anteil wird aus diesem Grund über den Überlauf 7 abgeführt.

Prinzipiell lässt sich ein erfindungsgemäßer dichtungsloser Mischer 1 überall dort einsetzen, wo Instantprodukte zu einem Endprodukt gemischt werden sollen. Die Erfindung ist insbesondere nicht auf Getränkeautomaten 20 beschränkt, welche als Standautomat für die kommerzielle Nutzung ausgebildet sind, sondern sieht alternativ auch Automaten vor, die für die private Nutzung gestaltet sind, beispielsweise in einer "Table Top"-Ausführung. Der erfindungsgemäße Mischer 1 kann beispielsweise in beliebigen Automaten zur Zubereitung von Suppen oder anderen dünnbreiigen Nahrungsmitteln eingesetzt werden. Weiterhin sind Ausführungen des Mischers 1 vorgesehen, bei denen mehrere Mischerräder 9 und/oder mehrere Schleuderscheiben 10 hintereinander an der Antriebswelle 8 angebracht sind.

### BEZUGSZEICHENLISTE

- 1: Mischer
- 2: Gehäusewand
- 3: Trichter
- 4: Einführöffnung
- 5: Antrieb, Elektromotor
- 6: Zuführrutsche
- 7: Überlauf
- 8: Antriebswelle
- 9: Mischerrad
- 10: Schleuderscheibe
- 11: Endproduktauslauf
- 12: Lagerschild
- 13: Überlaufauslass
- 14: Rippenstrukur
- 15: Flüssigkeitseinlass
- 16: Stirnseite
- 17: Lager
- 18: Mischerkammer
- 19: Einlass
- 20: Getränkeautomat
- 21: Gehäuse
- 22: Anzeigefeld
- 23: Ausgabefach
- 24: Rückgeldfach
- 25: Auswahlfeld
- 26: Aufsteckzylinder
- 27: Überlaufvorrichtung
- 28: Kragen
- 29: Bohrung
- 30: Absaugung

## Patentansprüche

1. Dichtungsloser Mischer (1) zur Zubereitung von Instantprodukten,
mit einer Mischerkammer (18) zur Vermischung eines in die Mischerkammer (18) eingelassenen Instantproduktes mit einer in die Mischerkammer (18) eingelassenen Flüssigkeit,
mit einer von einem Antrieb (5) antreibbaren Antriebswelle (8), welche antriebsseitig durch ein Lagerschild (12) hindurch in die Mischerkammer (18) hineinführend angeordnet ist,
mit einem Mischerrad (9), welches innerhalb der Mischerkammer (18) im Bereich eines Einlasses (19) an der Antriebswelle (8) angebracht ist und welches dazu ausgebildet ist, das eingelassene Instantprodukt mit der eingelassenen Flüssigkeit durch Rotation zu einem Endprodukt zu vermischen, **dadurch gekennzeichnet, dass** der dichtungsloser Mischer (1) eine Schleuderscheibe (10) umfasst, welche innerhalb der Mischerkammer (18) an der Antriebswelle (8) zwischen dem Mischerrad (9) und dem Lagerschild (12) angebracht ist und welche dazu ausgebildet ist, das vom Mischerrad (9) erzeugte Endprodukt vom Lagerschild (12) fernzuhalten.

2. Mischer nach Anspruch 1,
**dadurch gekennzeichnet,**
**dass** die Antriebswelle (8) vom Lagerschild (12) ausgehend schräg nach unten ausgerichtet ist.

3. Mischer nach einem der vorstehenden Ansprüche,
**dadurch gekennzeichnet,**
**dass** der Einlass (19) von oben schräg nach unten auf die Antriebswelle (8), vorzugsweise in einem rechten Winkel zur Ausrichtung der Antriebswelle, ausgerichtet ist.

4. Mischer nach einem der vorstehenden Ansprüche,
**dadurch gekennzeichnet,**
**dass** ein Endproduktauslass (11) an einer unteren Seite der Mischerkammer (18) vorgesehen ist.

5. Mischer nach Anspruch 4,
**dadurch gekennzeichnet,**
**dass** der Endproduktauslass (11) so angeordnet und ausgebildet ist, dass das Endprodukt aus dem Endproduktauslass (11) selbstständig aus der Mischerkammer (18) austreten kann, und/oder dass der Einlass (19) oberhalb des Endproduktauslasses (11) angeordnet ist.

6. Mischer nach einem der vorstehenden Ansprüche,
**dadurch gekennzeichnet,**
**dass** lagerschildseitig Rippenstrukturen (14) an der Schleuderscheibe (10) vorgesehen sind, welche dazu ausgebildet sind, bei Rotation der Schleuderscheibe (10) einen Überdruck zwischen der Schleuderscheibe (10) und dem Lagerschild (12) gegenüber der restlichen Mischerkammer (18) zu erzeugen.

7. Mischer nach Anspruch 6,
**dadurch gekennzeichnet,**
**dass** die Rippenstrukturen (14) auf der Schleuderscheibe (10) flügelartig in regelmäßigen Abständen um die Antriebswelle (8) herum angebracht sind und/oder dass die Rippenstrukturen (14) senkrecht auf der Schleuderscheibe (10) in Richtung des Lagerschilds (12) angeordnet sind.

8. Mischer nach einem der vorstehenden Ansprüche,
**dadurch gekennzeichnet,**
**dass** das Mischerrad (9) als ein Flügelrad ausgebildet ist.

9. Mischer nach einem der vorstehenden Ansprüche,
**dadurch gekennzeichnet,**
**dass** ein Überlauf (7) zwischen der Schleuderscheibe (10) und dem Lagerschild (12) angeordnet ist und dazu ausgebildet ist, zwischen der Schleuderscheibe (10) und dem Lagerschild (12) vorhandene Flüssigkeit abzuleiten.

10. Mischer nach einem der vorstehenden Ansprüche,
**dadurch gekennzeichnet,**
**dass** das Lagerschild (12) mit zumindest einem Kragen (28) ausgebildet ist, der vom Lagerschild (12) ausgehend auf die Schleuderscheibe (10) ausgerichtet ist und dazu ausgebildet ist, zwischen die Schleuderscheibe (10) und den Lagerschild (12) gelangende Flüssigkeit von der Antriebswelle (8) fernzuhalten.

11. Mischer nach einem der vorstehenden Ansprüche,
**dadurch gekennzeichnet,**
**dass** ein Antrieb (5), insbesondere ein Elektromotor, zum Antrieb der Antriebswelle (8) vorgesehen ist.

12. Mischer nach einem der vorstehenden Ansprüche,
**dadurch gekennzeichnet,**
**dass** eine Stirnfläche (16) der Antriebswelle (8) mit einer unteren Gehäusewand (2) der Mischerkammer (18) abschließt.

13. Mischer nach einem der vorstehenden Ansprüche,
**dadurch gekennzeichnet,**
**dass** ein Trichter (3) vorgesehen ist, über welchen die Mischerkammer (18) durch den Einlass (19) mit dem Instantprodukt und/oder der Flüssigkeit befüllbar ist, insbesondere dass eine Absaugung (30) mit dem Trichter (3) verbunden ist, die dazu ausgebildet ist, sich im Trichter (3) bildenden Dampf abzusaugen.

14. Mischer nach einem der vorstehenden Ansprüche,
**dadurch gekennzeichnet,**
**dass** die Antriebswelle (8) über ein Radiaxlager mit dem Antrieb (5) verbunden ist.

15. Getränkeautomat zur Zubereitung von Kaltgetränken, Warmgetränken und/oder anderen flüssigen Lebensmitteln mit einem dichtungslosen Mischer nach einem der Ansprüche 1 bis 14.

## Claims

1. Sealless mixer (1) for preparing instant products,
comprising a mixing chamber (18) for mixing an instant product admitted into the mixing chamber (18) with a liquid admitted into the mixing chamber (18), comprising a drive shaft (8) which can be driven by a drive (5) and which is arranged leading into the mixing chamber (18) through a bearing plate (12) on the drive side, comprising a mixing wheel (9) which is attached to the drive shaft (8) within the mixing chamber (18) in the region of an inlet (19) and which is formed to mix the admitted instant product with the admitted liquid by rotation to form an end product, **characterised in that** the sealless mixer (1) comprises a centrifugal disc (10) which is attached to the drive shaft (8) within the mixing chamber (18) between the mixing wheel (9) and the bearing plate (12) and which is formed to keep the end product produced by the mixing wheel (9) away from the bearing plate (12).

2. Mixer according to claim 1,
**characterised in that**
the drive shaft (8) is orientated diagonally downwards from the bearing plate (12).

3. Mixer according to either of the preceding claims,
**characterised in that**
the inlet (19) is orientated diagonally downwards onto the drive shaft (8) from above, preferably at a right angle to the orientation of the drive shaft.

4. Mixer according to any of the preceding claims,
**characterised in that**
an end product outlet (11) is provided on a lower face of the mixing chamber (18).

5. Mixer according to claim 4,
**characterised in that**
the end product outlet (11) is arranged and formed in such a way that the end product can exit the mixing chamber (18) automatically from the end product outlet (11) and/or that the inlet (19) is arranged above the end product outlet (11).

6. Mixer according to any of the preceding claims,
**characterised in that**
rib structures (14) are provided on the centrifugal disc (10) on the bearing plate side, and are formed to produce an overpressure between the centrifugal disc (10) and the bearing plate (12) with respect to the rest of the mixing chamber (18) when the centrifugal disc (10) rotates.

7. Mixer according to claim 6,
**characterised in that**
the rib structures (14) are attached to the centrifugal disc (10) at regular intervals around the drive shaft in the manner of blades, and/or **in that** the rib structures (14) are arranged on the centrifugal disc (10) perpendicularly in the direction of the bearing plate (12).

8. Mixer according to any of the preceding claims,
**characterised in that**
the mixing wheel (9) is formed as an impeller wheel.

9. Mixer according to any of the preceding claims,
**characterised in that**
an overflow (7) is arranged between the centrifugal disc (10) and the bearing plate (12), and is formed to discharge liquid present between the centrifugal disc (10) and the bearing plate (12).

10. Mixer according to any of the preceding claims,
**characterised in that**
the bearing plate (12) is formed with at least one collar (28), which is orientated towards the centrifugal disc (10) from the bearing plate (12) and which is formed to keep liquid which arrives between the centrifugal disc (10) and the bearing plate (12) away from the drive shaft (8).

11. Mixer according to any of the preceding claims,
**characterised in that**
a drive (5), in particular an electric motor, is provided for driving the drive shaft (8).

12. Mixer according to any of the preceding claims,
**characterised in that**
an end face (16) of the drive shaft (8) ends with a lower housing wall (2) of the mixing chamber (18).

13. Mixer according to any of the preceding claims,
**characterised in that**
a funnel (3) is provided, via which the mixing chamber (18) can be filled with the instant product and/or with the liquid through the inlet (19), in particular **in that** a suction extractor (30) is connected to the funnel (3) and is formed to suck out vapour which forms in the funnel (3).

14. Mixer according to any of the preceding claims,
**characterised in that**
the drive shaft (8) is connected to the drive (5) via a radiax bearing.

15. Drinks machine for preparing cold drinks, hot drinks and/or other liquid foodstuffs, comprising a sealless mixer according to any of claims 1 to 14.

## Revendications

1. Mélangeur sans joint d'étanchéité (1) destiné à la préparation de produits instantanés, comportant :
une chambre de mélangeur (18) destinée au mélange d'un produit instantané introduit dans la chambre de mélangeur (18) avec un liquide introduit dans la chambre de mélangeur (18),
un arbre d'entraînement (8) qui peut être entraîné par un entraînement (5), et qui est disposé, côté entraînement, pénétrant dans la chambre de mélangeur (18) à travers un palier flasque (12),
une roue de mélangeur (9), qui est montée sur l'arbre d'entraînement dans la chambre de mélangeur (18) dans la zone d'une entrée (19) et qui est conçue pour mélanger par rotation le produit instantané introduit avec le liquide introduit pour obtenir un produit final, **caractérisé en ce que** le mélangeur sans joint d'étanchéité (1) comprend un disque centrifuge (10), qui est monté, dans la chambre de mélangeur (18), sur l'arbre d'entraînement (8) entre la roue de mélangeur (9) et le palier flasque (12) et qui est conçu pour maintenir le produit final généré par la roue de mélangeur (9) à distance du palier flasque (12).

2. Mélangeur selon la revendication 1,
**caractérisé en ce**
**que** l'arbre d'entraînement (8) est orienté obliquement vers le bas en partant du palier flasque (12).

3. Mélangeur selon l'une des revendications précédentes, **caractérisé en ce que** l'entrée (19) est orientée obliquement de haut en bas en direction de l'arbre d'entraînement (8), de préférence selon un angle droit par rapport à l'orientation de l'arbre d'entraînement.

4. Mélangeur selon l'une des revendications précédentes,
**caractérisé en ce**
**qu'**une sortie de produit final (11) est prévue sur un côté inférieur de la chambre de mélangeur (18).

5. Mélangeur selon la revendication 4,
**caractérisé en ce**
**que** la sortie de produit final (11) est disposée et conçue de telle sorte que le produit final peut sortir par la sortie de produit final (11) de manière autonome hors de la chambre de mélangeur (18), et/ou en ce que l'entrée (19) est disposée au-dessus de la sortie de produit final (11).

6. Mélangeur selon l'une des revendications précédentes,
**caractérisé en ce**
**que** des structures de nervures (14) sont prévues sur le disque centrifuge (10) côté palier flasque, lesdites structures de nervures étant conçues pour générer, lors de la rotation, une surpression entre le disque centrifuge (10) et le palier flasque (12) par rapport au reste de la chambre de mélangeur (18).

7. Mélangeur selon la revendication 6,
**caractérisé en ce**
**que** les structures de nervures (14) sur le disque centrifuge (10) sont appliquées à la manière d'ailettes à intervalles réguliers autour de l'arbre d'entraînement (8) et/ou en ce que les structures de nervures (14) sont disposées perpendiculairement sur le disque centrifuge (10) en direction du palier flasque (12).

8. Mélangeur selon l'une des revendications précédentes,
**caractérisé en ce**
**que** la roue de mélangeur (9) est réalisée sous la forme d'une roue hélice.

9. Mélangeur selon l'une des revendications précédentes,
**caractérisé en ce**
**qu'**un déversoir (7) est disposé entre le disque centrifuge (10) et le palier flasque (12) et est conçu pour évacuer du liquide présent entre le disque centrifuge (10) et le palier flasque (12).

10. Mélangeur selon l'une des revendications précédentes,
**caractérisé en ce**
**que** le palier flasque (12) est réalisé avec au moins un collet (28), qui est orienté à partir du palier flasque (12) en direction du disque centrifuge (10) et qui est conçu pour maintenir du liquide parvenant entre le disque centrifuge (10) et le palier flasque (12) à distance de l'arbre d'entraînement (8).

11. Mélangeur selon l'une des revendications précédentes,
**caractérisé en ce**
**qu'**un entraînement (5), en particulier un moteur électrique, est prévu pour l'entraînement de l'arbre d'entraînement (8).

12. Mélangeur selon l'une des revendications précédentes,
**caractérisé en ce**
**qu'**une face frontale (16) de l'arbre d'entraînement (8) se termine avec une paroi de boîtier (2) inférieure de la chambre de mélangeur (18).

13. Mélangeur selon l'une des revendications précédentes,
**caractérisé en ce**
**qu'**un entonnoir (3) est prévu, par le biais duquel la chambre de mélangeur (18) peut être remplie du produit instantané et/ou du liquide par l'entrée (19), en particulier en ce qu'une aspiration (30), qui est conçue pour aspirer de la vapeur se formant dans l'entonnoir (3), est reliée à l'entonnoir (3).

14. Mélangeur selon l'une des revendications précédentes,
**caractérisé en ce**
**que** l'arbre d'entraînement (8) est relié à l'entraînement (5) par le biais d'un palier radial-axial.

15. Automate à boissons destiné à la préparation de boissons froides, de boissons chaudes et/ou d'autres produits alimentaires liquides comportant un mélangeur sans joint d'étanchéité selon l'une des revendications 1 à 14.
